# EUROPEAN PATENT APPLICATION

(11) **EP 3 936 010 A1**
(43) Date of publication of application: **12.01.2022**
(21) Application number: 21763203.3
(22) Date of filing: 18.01.2021
(51) Int. Cl.: A47J 31/40

(54) **BEVERAGE MAKING MACHINE**

(30) Priority: 25.03.2020 CN 202010216218
(71) Applicant: Sheng Lin International Co., Ltd, Yuanlin City, Changhua County 51048, Taiwan (TW)
(72) Inventor: CHANG, Wen Cheng, Dongguan, Guangdong 523000 (CN)
(74) Representative: Zaboliene, Reda
(86) International application number: PCT/CN2021/072365
(87) International publication number: WO 2021/190109

(57) **Abstract**

A beverage manufacturing machine includes a heating mechanism, a brewing mechanism and a cooling mechanism. The heating mechanism heats up drinking water and sends the hot drinking water to the brewing mechanism. There are two brewing mechanisms for brewing a hot drink, and the hot drink in a primary cooling bushing exchanges heat with room temperature water to realize a first cooling. The drink after the first cooling reaches a secondary cooling bushing to exchange heat with a low temperature coolant to realize a second cooling to produce an iced drink. The coolant after the heat exchange enters into a coolant buffer and then reflows to a coolant container, and a compressor drives the heat exchanger to lower the temperature of the coolant. Without requiring high skill, this machine makes good-tasted beverages with appropriate concentration or original iced liquid beverage with great aroma.

## Description

### FIELD OF THE INVENTION

The present invention relates to the field of beverage manufacturing, and in particular to a beverage manufacturing machine capable of making a hot drink or a cold drink quickly.

### BACKGROUND OF THE INVENTION

In the beverage manufacturing industry, a staff of a beverage store usually adds hot water into various ingredients (such as coffee, milk, tea, sugar, and salt) to prepare a hot liquid soup with a special taste and then adds ice into the hot liquid soup directly to make an iced drink according to a customer's order, and the disadvantage of this cooling method is that the taste of the drink is affected directly by the amount of ice added and the proficiency of the staff of the store. If too much ice is added, then the drink will be diluted and the taste will be too light. On the other hand, if too little ice is added, then the temperature of the drink will not be lowered and the taste will be too strong. In addition, more and more people do not go to the beverage store directly, but simply order tea, coffee or other drinks by courier. However, the delivery time is uncertain, and the ice-melting speed will affect the taste of the drink, which will eventually lead to the results that the consumers cannot have a drink of good taste and may even have a bad impression of the beverage store. Moreover, it is necessary to wait for the drinking water to be heated before making a drink, and the long wait for the heating is not conducive to making a drink quickly.

### SUMMARY OF THE INVENTION

To overcome the shortcomings and deficiencies of the prior art, an objective of the invention is to provide a beverage manufacturing machine capable of making a drink quickly and providing a high cooling efficiency, and the beverage manufacturing machine comprises a heating mechanism, a brewing mechanism and a cooling mechanism, and the heating mechanism heats up drinking water for use and sends the hot drinking water to the brewing mechanism whose quantity is at least one, and the brewing mechanism is provided for brewing a hot drink, and the cooling mechanism is provided for cooling the hot drink. The beverage manufacturing machine is characterized in that the cooling mechanism comprises a primary cooling bushing, a secondary cooling bushing, a coolant container, a coolant buffer, a heat exchanger and a compressor, and the primary cooling bushing and the secondary cooling bushing are a double-layered structure, and the primary cooling bushing has an inner tube communicated with an inner tube of the secondary cooling bushing and an outer tube communicated with a room temperature water source, and the secondary cooling bushing has an outer tube inlet communicated with the coolant container and outer tube outlet communicated with the coolant buffer, and the hot drink in the primary cooling bushing exchange heat with room temperature water to realize a first cooling, and the drink reaches the secondary cooling bushing after the first cooling to exchange heat with the low temperature coolant to realize a second cooling to form an iced drink, and the coolant after the heat exchange enters into the coolant buffer and then reflow to the coolant container, and the compressor drives the heat exchanger to lower the temperature of the coolant.

In a preferred embodiment of the present invention, the heating mechanism comprises an external water pipe, a heating container and an insulated container, and the drinking water is passed through the external water pipe and inputted into the heating container, and the heating container heats up drinking water and sends the hot drinking water to the insulated container, and the insulated container keeps the temperature of the drinking water, and the insulated container outputs the drinking water to the brewing mechanism.

In a preferred embodiment of the present invention, the heating container heats up the drinking water to a predetermined temperature of 60-80 °C , and the insulated container maintains the temperature of the drinking water.

In a preferred embodiment of the present invention, the brewing mechanism comprises a small heating water storage container, a brewing container and a feeding chute, and the heating mechanism heats up drinking water and sends the hot drinking water to the small heating water storage container, and the small heating water storage container sends the hot drinking water to the brewing container, and the brewing container has a feeding port formed at a top opening thereof, and the feeding chute is obliquely installed and an end of the feeding chute is disposed on the brewing container, and the feeding chute is provided for guiding and feeding a raw material into the brewing container.

In a preferred embodiment of the present invention, the brewing container is communicated with a hot drink outlet pipe and a hot drink cooling duct, and hot drink requiring no cooling is outputted directly to the hot drink outlet pipe, and the hot drink requiring cooling is outputted to the inner tube of the primary cooling bushing through the hot drink cooling duct.

In a preferred embodiment of the present invention, the brewing container has a first motor installed on a side thereof and provided for driving the brewing container to rotate, tilt and dump a scrap, and a second motor for driving the whole brewing container to ascend, and a container lid is installed exactly above the brewing container.

In a preferred embodiment of the present invention, the room temperature water is tap water, and the coolant is propylene glycol, ethylene glycol or another coolant.

In a preferred embodiment of the present invention, the heat exchanger is a coil heat exchanger or a plate heat exchanger.

In a preferred embodiment of the present invention, the beverage manufacturing machine further comprises a plurality of water pumps and solenoid valves, and the water pump supplying power, and the solenoid valve controlling pipeline conduction.

In a preferred embodiment of the present invention, the beverage manufacturing machine has two compressors working alternately.

The present invention has the following advantages and effects: the heating mechanism prepares the hot drinking water in advance, so that when it is necessary to make a beverage, the hot drinking water can be sent to the brewing mechanism timely to shorten the waiting time for hot water, and the hot drink goes through the first cooling and exchanges heat with the room temperature water in the primary cooling bushing, and then goes through the second cooling and exchanges heat with the coolant in the secondary cooling bushing to produce the iced drink, and the room temperature water is tap water which is easily accessible, and the coolant is propylene glycol, ethylene glycol which can lower the temperature quickly, and the hot drink is processed by the second cooling to obtain the iced drink quickly, and the coolant after the heat exchange becomes a high temperature coolant that enters into the coolant buffer, and the high temperature coolant in the coolant will be stored to a specific amount and then reflowed to the coolant container after all of the low temperature coolant are discharged from the coolant container, and such arrangement can avoid the high temperature coolant from reflowing to the coolant container to early, and avoid an instant temperature rise when the low temperature coolant and the high temperature coolant are mixed, so that when the coolant is further cooled by the heat exchanger and compressor, a waste of power consumption due to the temperature rise can be avoided, and such arrangement achieves the effects of improving the cooling efficiency, saving power, cooling the beverage continuously in loops without incurring a larger power consumption, and providing a high efficiency to meet commercial requirements. Compared with the prior art, this invention does not required additional ice nor the skill of an operator to make a beverage with a delicious taste and an appropriate concentration (which will affect the taste of the beverage) and an original iced liquid beverage with great aroma of the liquid beverage. The invention also has the effects of avoiding the bitter or sour taste of the high-temperature liquid beverage, bringing users a better experience and satisfying commercial requirements.

### SUMMARY OF THE INVENTION

FIG. 1 is a schematic three-dimensional view of the invention;
FIG. 2 is a cross-sectional view of the invention;
FIG. 3 is a schematic view showing the heat exchange of a drink in a primary cooling bushing and a secondary cooling bushing in accordance with the invention;
FIG. 4 is a flow chart showing the beverage manufacturing of the invention; and
FIG. 5 is a flow chart showing the heat exchange of a coolant of the invention.

### DESCRIPTION OF THE PREFERRED EMBODIMENTS

The aforementioned and other objectives and advantages of this disclosure will become clearer in light of the following detailed description of an illustrative embodiment of this invention described in connection with the drawings.

In the description of this disclosure, it should be understood that the terms "center", "top", "bottom", "left", "right", "vertical", "horizontal", "inside", "outside", etc. refer to an indicated orientation and a positional relation based on the orientation and positional relation as shown in the attached drawings. These terms are used for the purpose of describing the creation of the invention and simplifying the description, but not intended for indicating or implying that the device or component must have the specific position, the specific positional structure and operation, so that these terms should not be construed as a limitation on this invention.

In the description of this disclosure, it should be understood that the terms "coupled" and "connected" are interpreted broadly, unless otherwise regulated and limited specifically. For example, the connection can be a fixed connection, a detachable connection, an integral connection, a mechanical connection, an electrical connection, a direct connection, an indirect connection through a medium, or a communication between two components. Persons having ordinary skill in the art can understand the specific meaning of the aforementioned terms of the invention according to specific situations

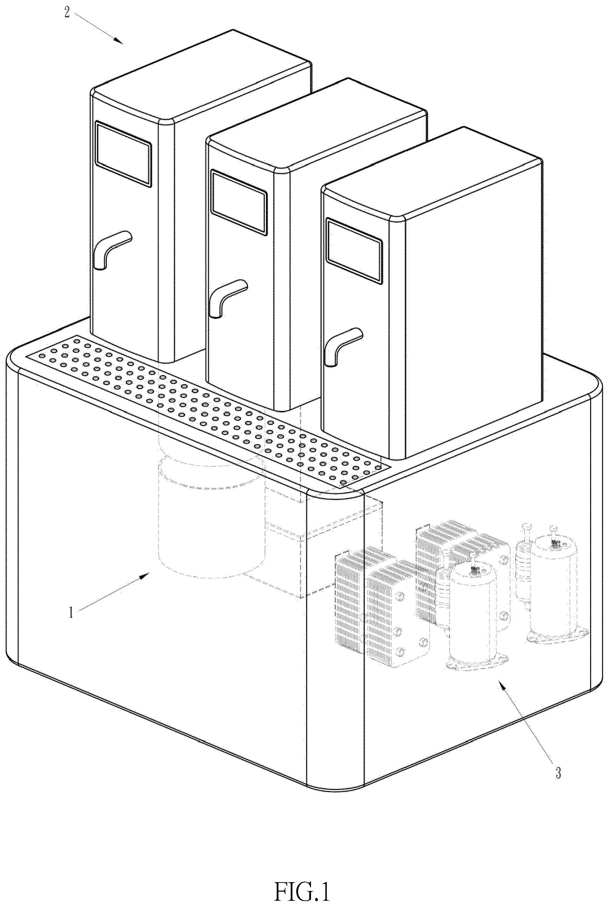

With reference to FIG. 1 for a beverage manufacturing machine of the invention, the beverage manufacturing machine comprises a heating mechanism 1, a brewing mechanism 2 and a cooling mechanism 3, and the heating mechanism 1 heats up drinking water in advance for use, and sends the hot drinking water to the brewing mechanism 2 (which comes with a quantity of at least one, and there are three brewing mechanism 2 in this embodiment), and the brewing mechanisms 2 are provided for brewing hot drink, and the cooling mechanism 3 is provided for cooling the hot drink.

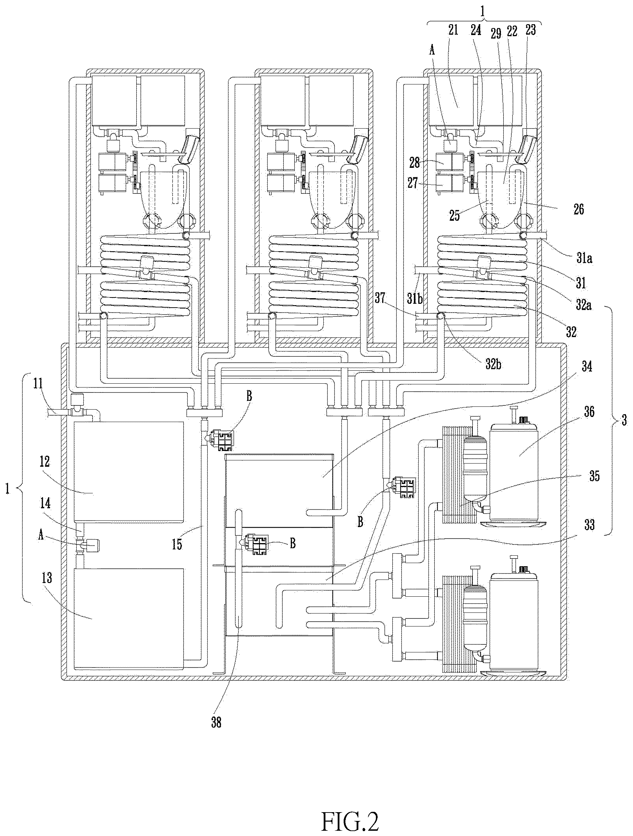

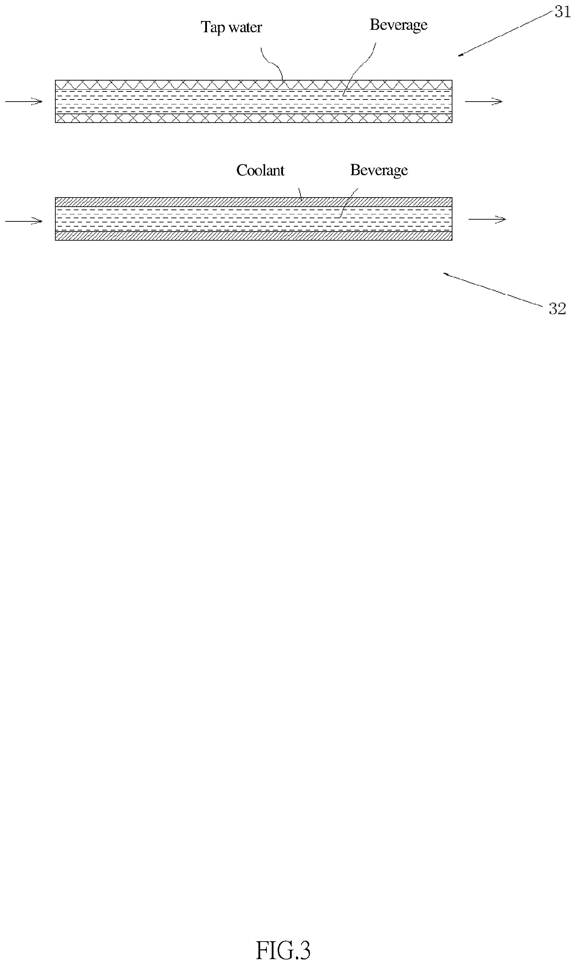

In FIGS. 2 and 3, the cooling mechanism 3 comprises a primary cooling bushing 31, a secondary cooling bushing 32, a coolant container 33, a coolant buffer 34, a heat exchanger 35 and a compressor 36, and the primary cooling bushing 31 and the secondary cooling bushing 32 are a double-layered structure, and an inner tube of the primary cooling bushing 31 is communicated with an inner tube of the secondary cooling bushing 32, and the inner tubes of the primary cooling bushing 31 and the secondary cooling bushing 32 are used for transmitting the hot drink, and an outer tube of the primary cooling bushing 31 is communicated with a room temperature water source, and the outer tube of the primary cooling bushing 31 has a room temperature water inlet 31a and a room temperature water outlet 31b, and room temperature water is entered from the room temperature water inlet 31a into the outer tube of the primary cooling bushing 31 and then discharged from the room temperature water outlet 31b, and an outer tube of the secondary cooling bushing 32 has a coolant inlet 32a and a coolant outlet 32b, and the outer tube inlet 32a of the secondary cooling bushing 32 is communicated with the coolant container 33, and the outer tube outlet 32b of the secondary cooling bushing 32 is communicated with the coolant buffer 34. The hot drink in the primary cooling bushing 31 exchanges heat with the room temperature water to realize a first cooling, and the drink after the first cooling reaches the secondary cooling bushing 32 and exchanges heat with the low temperature coolant to realize a second cooling to produce an iced drink. The coolant after the heat exchange enters into the coolant buffer 34 and reflows to the coolant container 33. The compressor 36 drives a refrigerant to circulate and enter into the heat exchanger 35 to lower the temperature of the coolant in the coolant container 33.

Specifically, the heating mechanism 1 comprises an external water pipe 11, a heating container 12 and an insulated container 13. The drinking water is passed through the external water pipe 11 and inputted into the heating container 12, and the heating container 12 is communicated with the insulated container 13 through a connecting pipe 14, and the connecting pipe has a solenoid valve A. The heating container heat up drinking water to a predetermined temperature 60∼80°C and sends the hot drinking water to the insulated container 13, and the insulated container 13 keeps the temperature of the drinking water for use at any time. The insulated container 13 has an outlet pipe 15, and a water pump B is installed to the outlet pipe 15, and the insulated container 13 outputs the drinking water to the brewing mechanism 2 through the outlet pipe 15, and the heating container 12 and the insulated container 13 can achieve the heating and heat preservation effects by electromagnetic induction, resistance wire, heat radiation.

Specifically, the brewing mechanism 2 comprises a small heating water storage container 21, a brewing container 22 and a feeding chute 23, and the amount of liquid stored in the small heating water storage container 21 must be much less than the amount of liquid stored in the insulated container 13. After the insulated drinking water enters into the small heating water storage container 21, the small heating water storage container 21 will heat up the drink to a specified temperature, and the small heating water storage container 21 is situated at the top and the brewing container 22 is situated at the bottom, and the small heating water storage container 21 and the brewing container 22 are communicated with each other through a beverage pipe 24, and the beverage pipe 24 has a solenoid valve A. When the solenoid valve A is opened, the small heating water storage container 21 sends the hot drinking water to the brewing container 22, and a feeding port is formed at the top opening of the brewing container 22, and the feeding chute 23 is obliquely installed and an end of the feeding chute 23 is near the top opening of the brewing container 22, so that raw materials (such as coffee, tea bag, powder, fruit tea powder or tea leaf) can be guided and inputted from the feeding chute 23 and mixed with the hot drink in the brewing container 22 for a specified time to produce a hot drink.

Specifically, the brewing container 22 is communicated with a hot drink outlet pipe 25 and a hot drink cooling duct 26, and a water pump B is installed to both of the hot drink outlet pipe 25 and the hot drink cooling duct 26, so that the hot drink not requiring cooling can be outputted directly from the hot drink outlet pipe 25, and the hot drink requiring cooling can be outputted to an inner tube of the primary cooling bushing 31 through the hot drink cooling duct 26.

Specifically, the brewing container 22 has a first motor 27 installed to a side of the brewing container 22 for driving the brewing container 22 to rotate, tilt and dump the scrap and a second motor 28 for driving the whole brewing container 22 to ascend, and a container lid 29 is installed exactly above the brewing container 22, and the first motor 27 drives the brewing container 22 to rotate by two mutually engaged gears, so as to dump the scrap tea or used tea bags, and the second motor 28 can lift up the whole brewing container 22 by the mutually engaged gears and racks, and the racks are installed on a side of the brewing container 22 to achieve the effect of ascending or descending the brewing container 22 to allow the container lid 29 to cover the brewing container for the purpose of brewing the beverage quickly.

Specifically, the room temperature water is tap water which is easily accessible, and the coolant is propylene glycol or ethylene glycol which can cool the beverage quickly without requiring a long waiting time and meet the commercial requirements. The heat exchanger 35 is a coil heat exchanger or a plate heat exchanger.

Specifically, the coolant container 33 and the coolant buffer 34 are communicated with each other through the coolant pipe 38, and a water pump B is installed to the coolant pipe 38. The coolant going through the heat exchange and discharged from the secondary cooling bushing 32 becomes a high temperature coolant which enters into the coolant buffer 34. When the high temperature coolant is stored to a specific quantity in the coolant buffer 34, the coolant will delay its reflow to the coolant container 33 after the low temperature coolant in the coolant container 33 is discharged. Such arrangement can prevent the low temperature coolant and the high temperature coolant from mixing with each other, and avoid large power consumption if the coolant is mixed with a high temperature liquid.

Specifically, there are two compressors 36 working alternately, and there are also two heat exchangers 35 operating with the compressors 36 respectively. If one of the compressors 36 is overheated or overloaded, the beverage manufacturing machine will break down, so that the other compressor will start working to guarantee that the cooling will not stop.

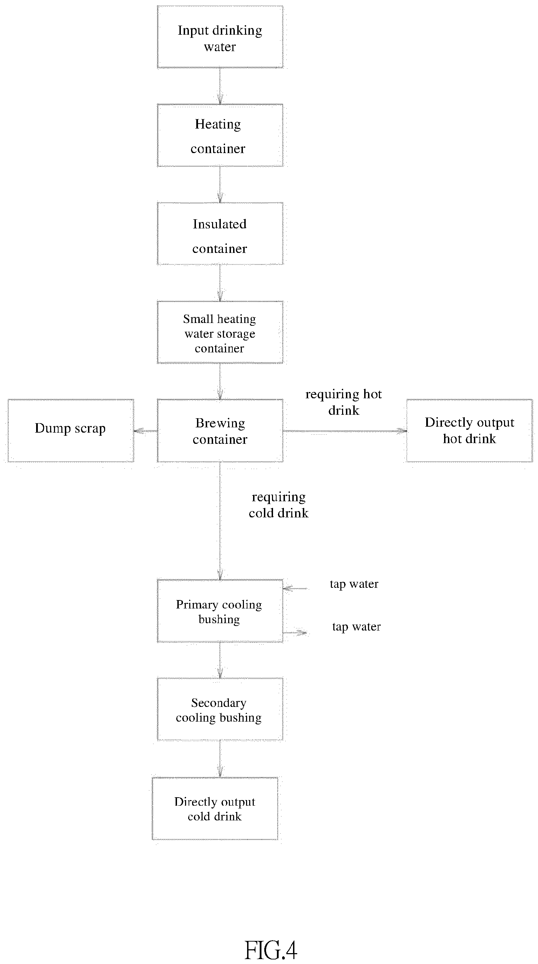

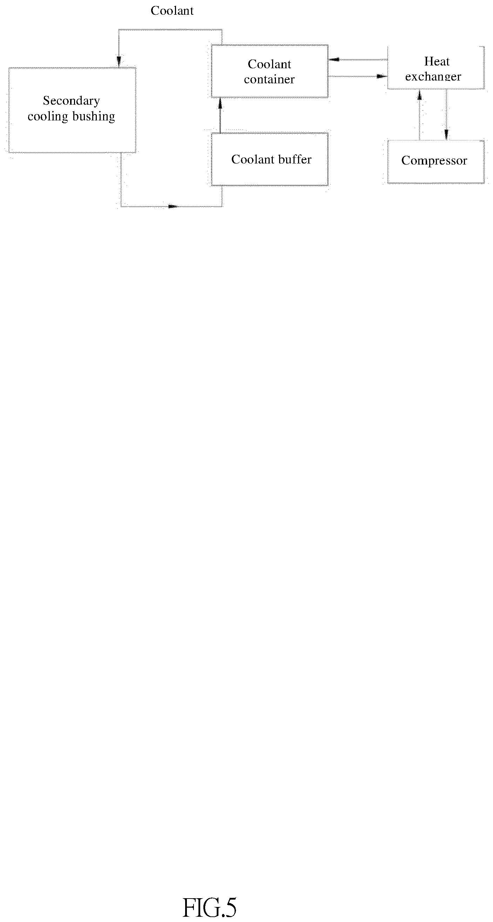

With reference to FIGS. 4 and 5 for the flow charts of a beverage manufacturing process, the process comprises the steps of: (1) entering drinking water into the heating container 12 through the external water pipe 11, and heating the drinking water to a predetermined temperature (approximately 60-80 degrees Celsius) by the heating container 12, and inputting and storing the hot drinking water in the insulated container 13; (2) sending the hot drinking water through the outlet pipe 15 to the small heating water storage container 21 by the insulated container 13, and heating the drink to a specified temperature by the small heating water storage container 21; (3) guiding and inputting a raw material (such as coffee, tea bag, powder, fruit tea powder or tea leaf) through the feeding chute 23 into the brewing container 22 to brew and produce a hot drink; (4) outputting the hot drink not requiring cooling directly from the hot drink outlet pipe 25, and sending the hot drink requiring cooling to an inner tube of the primary cooling bushing 31 from the hot drink cooling duct 26; (5) exchanging heat of the hot drink in the primary cooling bushing 31 with the room temperature water to realize a first cooling; and (6) exchanging the heat of the drink reaching the secondary cooling bushing 32 after the first cooling with the low temperature coolant to realize a second cooling to produce an iced drink, and finally outputting the iced drink through an export pipe 37.

While the invention is described in some detail hereinbelow with reference to certain illustrated embodiments, it is to be understood that there is no intent to limit it to those embodiments. On the contrary, the aim is to cover all modifications, alternatives and equivalents falling within the spirit and scope of the invention as defined by the appended claims.

## Claims

1. A beverage manufacturing machine, comprising a heating mechanism, a brewing mechanism and a cooling mechanism, and the heating mechanism heating up drinking water for use and sending the hot drinking water to the brewing mechanism whose quantity is at least one, and the brewing mechanism being provided for brewing a hot drink, and the cooling mechanism being provided for cooling the hot drink, **characterized in that** the cooling mechanism comprises a primary cooling bushing, a secondary cooling bushing, a coolant container, a coolant buffer, a heat exchanger and a compressor, and the primary cooling bushing and the secondary cooling bushing are a double-layered structure, and the primary cooling bushing has an inner tube communicated with an inner tube of the secondary cooling bushing and an outer tube communicated with a room temperature water source, and the secondary cooling bushing has an outer tube inlet communicated with the coolant container and outer tube outlet communicated with the coolant buffer, and the hot drink in the primary cooling bushing exchange heat with room temperature water to realize a first cooling, and the drink reaches the secondary cooling bushing after the first cooling to exchange heat with the low temperature coolant to realize a second cooling to form an iced drink, and the coolant after the heat exchange enters into the coolant buffer and then reflow to the coolant container, and the compressor drives the heat exchanger to lower the temperature of the coolant.

2. The beverage manufacturing machine as claimed in claim 1, wherein the heating mechanism comprises an external water pipe, a heating container and an insulated container, and the drinking water is passed through the external water pipe and inputted into the heating container, and the heating container heats up drinking water and sends the hot drinking water to the insulated container, and the insulated container keeps the temperature of the drinking water, and the insulated container outputs the drinking water to the brewing mechanism.

3. The beverage manufacturing machine as claimed in claim 2, wherein the heating container heats up the drinking water to a predetermined temperature of 60∼80 °C , and the insulated container maintains the temperature of the drinking water.

4. The beverage manufacturing machine as claimed in claim 1, wherein the brewing mechanism comprises a small heating water storage container, a brewing container and a feeding chute, and the heating mechanism heats up drinking water and sends the hot drinking water to the small heating water storage container, and the small heating water storage container sends the hot drinking water to the brewing container, and the brewing container has a feeding port formed at a top opening thereof, and the feeding chute is obliquely installed and an end of the feeding chute is disposed on the brewing container, and the feeding chute is provided for guiding and feeding a raw material into the brewing container.

5. The beverage manufacturing machine as claimed in claim 4, wherein the brewing container is communicated with a hot drink outlet pipe and a hot drink cooling duct, and hot drink requiring no cooling is outputted directly to the hot drink outlet pipe, and the hot drink requiring cooling is outputted to the inner tube of the primary cooling bushing through the hot drink cooling duct.

6. The beverage manufacturing machine as claimed in claim 4, wherein the brewing container has a first motor installed on a side thereof and provided for driving the brewing container to rotate, tilt and dump a scrap, and a second motor for driving the whole brewing container to ascend, and a container lid is installed exactly above the brewing container.

7. The beverage manufacturing machine as claimed in claim 1, wherein the room temperature water is tap water, and the coolant is propylene glycol, ethylene glycol or another coolant.

8. The beverage manufacturing machine as claimed in claim 1, wherein the heat exchanger is a coil heat exchanger or a plate heat exchanger.

9. The beverage manufacturing machine as claimed in claim 1, further comprising a plurality of water pumps and solenoid valves, and the water pump supplying power, and the solenoid valve controlling pipeline conduction.

10. The beverage manufacturing machine as claimed in claim 1, wherein compressor comes with a quantity of two, and the two compressor work alternately.
